(19) Europäisches Patentamt
European Patent Office
Office européen des brevets

(11) **EP 1 561 072 B1**

(12) **EUROPÄISCHE PATENTSCHRIFT**

(45) Veröffentlichungstag und Bekanntmachung des Hinweises auf die Patenterteilung:
**06.07.2016 Patentblatt 2016/27**

(21) Anmeldenummer: **03753196.9**

(22) Anmeldetag: **23.10.2003**

(51) Int Cl.:
***F23D 11/40*** *(2006.01)*

(86) Internationale Anmeldenummer:
**PCT/CH2003/000691**

(87) Internationale Veröffentlichungsnummer:
**WO 2004/038291 (06.05.2004 Gazette 2004/19)**

(54) **VERBRENNUNGSVERFAHREN UND BRENNERKOPF, SOWIE BRENNER MIT EINEM SOLCHEN BBRENNERKOPF UND HEIZKESSEL MIT EINEM SOLCHEN BRENNERKOPF**

COMBUSTION METHOD AND BURNER HEAD, BURNER COMPRISING ONE SUCH BURNER HEAD, AND BOILER COMPRISING ONE SUCH BURNER HEAD

PROCEDE DE COMBUSTION ET TETE DE BRULEUR, BRULEUR POURVU D'UNE TELLE TETE DE BRULEUR ET CHAUDIERE DE CHAUFFAGE COMPORTANT UNE TELLE TETE DE BRULEUR

(84) Benannte Vertragsstaaten:
**AT BE BG CH CY CZ DE DK EE ES FI FR GB GR HU IE IT LI LU MC NL PT RO SE SI SK TR**

(30) Priorität: **23.10.2002 CH 17772002**

(43) Veröffentlichungstag der Anmeldung:
**10.08.2005 Patentblatt 2005/32**

(73) Patentinhaber: **Swiss E-Technic AG**
**7303 Mastrils (CH)**

(72) Erfinder: **FÜLLEMANN, Jörg**
**CH-7303 Mastrils (CH)**

(74) Vertreter: **Hasler, Erich et al**
**c/o Riederer Hasler & Partner**
**Patentanwälte AG**
**Elestastrasse 8**
**7310 Bad Ragaz (CH)**

(56) Entgegenhaltungen:
**EP-A- 0 867 658    DE-A- 4 008 692**
**DE-U- 9 012 283**

EP 1 561 072 B1

## Beschreibung

Im klassischen Ölbrenner wird das Heizöl mit hohem Druck in die in den Feuerraum einströmende Zuluft eingespritzt. Die Geschwindigkeitsdifferenz zwischen Luft und Öltröpfchen begünstigt eine Verdampfung des Öls und führt damit zu einer Verkleinerung des Öltröpfchens, bis schliesslich die Geschwindigkeitsdifferenz zwischen Luft und Öltröpfchen verschwunden ist. Mit abnehmender Geschwindigkeit bildet die verdampfte Flüssigkeit um den Tropfen herum ein Gemisch aus Brennstoffdampf und Luft mit zunehmendem Brennstoffdampfanteil. Die Entflammbarkeit des Gemisches nimmt während des Verdampfungsprozesses zu. Durch die Wärme der im Brenner bereits bestehenden Flamme entzündet sich dieses zunehmend leichter entflammbare Gemisch.

Damit sich die Flammen nicht vom Brennerkopf löst, wird bei Gelbbrennern zentral oder ringförmig um einen zentralen Bereich herum mit einer Stauscheibe eine Unterdruckzone geschaffen. Dieser Unterdruckzone wird eine geringere Menge, in Rotation versetzte Zuluft zugeführt. In diese Unterdruckzone wird auch der Brennstoff eingesprüht. Er brennt in diesem Flammenkern unter Sauerstoffmangel. Sekundärluft wird zentral und/oder durch einen Ringschlitz rund um diese Unterdruckzone in relativ grosser Menge zugeführt und erlaubt die Verbrennung des gesamten zugeführten Brennstoffes in einer langgestreckten Flamme. Dank der zentralen Unterdruckzone und der diese umhüllenden Frischluftzufuhr wird der Flammenkern und damit die gesamte Flamme gegen die Stauscheibe gesogen. Dadurch hält die Flamme stromab der Stauscheibe und löst sich nicht von dieser.

Es wird jedoch bei dieser Verbrennung eine hohe Flammentemperatur erreicht. Diese hohe Temperatur führt einerseits zu Verkockungen der Brennstoffdüse, was die Betriebssicherheit beeinträchtigt, und andererseits zu günstigen Bedingungen für die Verbindung von Luftstickstoff und Luftsauerstoff. Es entsteht bei einer solchen Verbrennung daher eine übermässige Konzentration von Stickoxiden (NOx). Bei dieser Verbrennung leuchtet die Flamme gelb. Das gelbe Licht wird von glühendem Kohlenstoff ausgestrahlt, der infolge einer Zersetzung des Brennstoffs entsteht

Man hat herausgefunden, dass die Konzentration der entstehenden Stickoxide sehr stark abhängig ist von der Verbrennungstemperatur. Eine Senkung um je 100 °C setzt die NOx-Konzentration auf den halben Wert herab. Gelingt es also, die Verbrennungstemperatur um 300 °C zu senken, so ist die NOx-Konzentration gegenüber der gelben Flammenverbrennung noch etwa 1/8.

Eine Kühlung der Flamme wird durch einen Überschuss an Zuluft, eine gezielte Rezirkulation von Abgasen und/oder durch eine räumliche Trennung von Verdampfungszone und Mischungszone von der Verbrennungszone erreicht.

Um die NOx-Werte im Rauchgas bei der Verbrennung von Heizöl zu senken, wurden sogenannte Blaubrenner entwickelt. Bei den Blaubrennern ist die Verbrennungszone möglichst getrennt von der Verdampfungs- und Mischzone. Dabei wird der Brennstoff in der Zuluft oder in einem Gemisch aus Zuluft und Verbrennungsgas verdampft und danach verbrannt. Bei den Brennern, welche eine nahezu stöchiometrische Verbrennung ermöglichen, muss eine Rezirkulation der Abgase vorgesehen sein.

Aus der EP-A-0 321 809 (Brown Boveri AG) ist ein Verfahren und ein Brenner für die vormischartige Verbrennung von flüssigem Brennstoff in einem Brenner bekannt. Der Brenner weist zwei sich ergänzende Teilkegelkörper auf, die sich zu einem Hohlkegel ergänzen und zwischen denen tangentiale Lufteintrittschlitze vorliegen. Die hohlen Teilkegelkörper besitzen eine in Strömungsrichtung zunehmende Kegelneigung. Die Kegelachsen der Teilkegelkörper sind voneinander beabstandet und zwischen diesen Kegelachsen ist eine Brennstoffdüse vorhanden, die einen flüssigen Brennstoff in einem Winkel in den Hohlkegel einspritzt, der gewährleistet, dass der Brennstoff die Hohlkegelwandung nicht benetzt. Durch die tangentialen Lufteintrittschlitze wird Luft zugeführt, die einen Mantel um den Brennstoffnebel bildet und um den Brennstoffkegel rotiert. Das Brennstoff-Luft-Gemisch erreicht im Bereich des Wirbelaufplatzens, beziehungsweise im Bereich einer zentralen Rückströmungszone im Mündungsbereich des Hohlkegels, die optimale, homogene Brennstoffkonzentration über den Querschnitt des Wirbels. Die Zündung erfolgt an der Spitze der Rückströmungszone.

Die niedrigsten Schadstoffemisonswerte werden mit diesem Brenner erreicht, wenn die Verdampfung vor dem Eintritt in die Verbrennungszone abgeschlossen ist. Dies gilt ebenso für eine Verbrennung mit einem Luftüberschuss von 60% wie auch bei Ersatz dieses Luftüberschusses durch rezirkuliertes Abgas. Wie die Abgase rezirkuliert werden, ist der Schrift nicht zu entnehmen. Bei der Gestaltung der Teilkegelkörper hinsichtlich deren Kegelneigung und der Breite der tangentialen Lufteintrittschlitze sind enge Grenzen einzuhalten, damit sich das gewünschte Strömungsfeld der Luft mit ihrer Rückströmzone im Bereich der Brennermündung zur Flammenstabilisierung einstellt.

Gemäss der EP-A-0 491 079 (Asea Brown Boveri AG) ist ein Nachteil dieses Brenners, dass er in einigen Fällen von atmosphärischen Feuerungsanlagen nicht zum Einsatz gebracht werden kann. Daher schlägt diese Schrift einen Brennerkopf vor, der minimale Schadstoff-Emissionen aufweist, und bei dem durch die Formgebung des Brennerkopfes sowie die Führung der Zuluft durch den Brenner sich am Ende einer Vormischzone im Zentrum und/oder an Aussenrand des Feuerraumes eine Stabilisation der Flamme einstellt. Offenbar war die Flammenstabilität des Brenners gemäss der EP-A-0 321 809 ungenügend.

Der Brennerkopf gemäss der EP-A-0 491 079 weist eine Brennstofflanze mit einer Brennstoffdüse auf. Um diese herum ist ein Zuluftkanal angeordnet. Abströmseitig schliesst dieser mit einer Blende ab. Um diesen ersten Zuluftkanal ist ein weiterer Zuluftkanal angeordnet. Dieser zweite Zuluftkanal ist abströmseitig mit einer Anzahl von Leitorganen versehen. Abströmseitig der Brennstoffdüse ist ein Feuerraum vorhanden, der in Abströmrichtung aus einem Vormischrohr und einem daran anschliessenden und gegenüber diesem im Durchmesser erweiterten Ausbrandrohr besteht. Eine Flammenstabilisation kann bei Bedarf durch Einbringen eines Störkörpers stromab der Vormischzone erreicht werden.

Im Betrieb dieses Brenners wird ein Teil der Zuluft über mindestens eine Blende in eine stromab einer Brennstoffdüse gelegene Vormischzone eingeströmt Ein weiterer Teil der Zuluft erhält vor Einströmung in die Vormischzone durch eine Anzahl von Leitorganen einen Drall und wird anschliessend mit einem rückgeführten Abgas vermischt. Stromab der Vormischzone bildet sich am Übergang von Vormischrohr zu Ausbrandrohr ein Wirbelring, der eine am Ende der Vormischzone sich bildende Wirbelrückströmzone umgibt. Die Initialzündung des Gemisches aus Zuluft und Brennstoff geschieht im Wirbelring.

Von der Vermischung des Brennstoffes mit einem Gemisch aus Zuluft und Rezirkulationsgas abweichend beschreibt die EP-A-0 867 658 ein Verfahren zur Verbrennung von flüssigem Brennstoff, bei dem der Brennstoff zuerst in rückgeführtem Abgas verdampft wird, und erst danach das Gemisch von Brennstoffgas und Abgas mit der mit einem Drall versehenen, in einem zentralen Strahl zugeführten Frischluft verwirbelt und entflammt wird. Der Drall wird dadurch erreicht, dass eine um die Brennstoffdüse herum angeordnete ringförmige Öffnung in der Stauscheibe mit Drall erzeugenden Leitflächen versehen ist. Mit der Luftführung wird ein Unterdruck erreicht, dank dem Rezirkulationsgase in das Flammrohr angesaugt werden. Diese Verbrennung zeichnet sich durch vorher nicht erreichte, tiefste Schadstoffemissionswerte aus. Zur Bildung einer Vergasungszone mit sauerstoffarmem Heissgas und zur Flammenstabilsierung ist ein Flammrohr vorgesehen. Stromauf sind am Flammrohr Rezirkulationsöffnungen vorhanden. Am abströmungsseitigen Ende des Flammrohres ist eine Verengung des Rohrdurchmessers ausgebildet, die der Flamme Halt gibt.

Nachteilig an diesen und weiteren Brennern ist, dass zur Stabilisierung der Flamme ein Flammrohr notwendig ist Flammrohre sind sehr belastete Teile, die durch den Gebrauch der Feuerungsanlage abgenutzt werden.

Das deutsche Gebrauchsmuster DE-U-9012 283 offenbart einen Brenner für flüssige Brennstoff mit einem in seinem flammenseitigen Endabschnitt konisch konvergierenden Flammrohr und einer konzentrisch im Flammrohr angeordneten Zerstäuberdüse. In der Mündungsöffnung des Flammrohrs ist eine kreisförmige Stauscheibe angeordnet, welche gegenüber der Mündungskante etwas zurückversetzt ist Die Stauscheibe besitzt eine zentrale Durchgangsbohrung und mehrere radiale Drallschlitze mit schrägen Luftleitflächen. Die Luftleitflächen nehmen zur Stauscheibe einen Winkel von ungefähr 30 Grad ein und sind auf der der Mündungsöffnung des Flammrohrs abgewandten Seite vorgesehen. Zwischen der Stauscheibe und dem Flammrohr ist ein Ringspalt von 0.5 bis 1.5 mm radialer Weite vorgesehen. Im Betrieb des Brenners wird durch den statischen Druck im Flammrohr die Verbrennungsluft durch den Ringspalt und die Drallschlitze gepresst. Dadurch entsteht im Ringspalt eine hohe Mischgeschwindigkeit und Mischintensität, und es wird eine Flamme mit Blaubrandeffekt erzeugt Ausserdem wird eine äussere Rezirkulation in einer Rezirkulationszone von der gelben Flammzone in die Flammwurzel erreicht Durch die Drallschlitze wird die innere Rezirkulation in der Rezirkulationszone verstärkt Alle diese Massnahmen haben angeblich zur Folge, dass die Schadstoffemissionen stark vermindert sind.

Es ist daher eine Aufgabe der Erfindung, ein Verbrennungsverfahren und einen Brennerkopf für einen eine nahezu stöchiometrische Verbrennung erlaubenden Low-NOx-Brenner vorzuschlagen, welche gewährleisten, dass der Brennerkopf ohne Flammrohr auskommt und dennoch eine gute Stabilität der Flamme erreicht ist und dass der Brennerkopf praktisch unabhängig der Gegebenheiten eines Feuerraumes oder Kesselraumes einsetzbar ist und auf jeden gewünschten Leistungsumfang angepasst werden kann.

Diese Aufgabe wird durch die Merkmale des unabhängigen Verfahrensanspruchs 1 bzw. durch die Merkmale des unabhängigen Vorrichtungsanspruchs 7 erfüllt.

Bei dem Verfahren zum Verbrennen eines Brennstoffes werden Brennstoff und Zuluft einem Feuerraum zugeführt und im Feuerraum entflammt Die Verbrennung geschieht in einer kühlen und daher blauen Flamme und mit niedrigen Schadstoffemmissionswerten. Die Zuluft wird dabei in einer Mehrzahl von voneinander beabstandeten, einander im Raume kreuzenden, divergierenden Zuluftstrahlen in den Verbrennungsraum geblasen. Im Feuerraum werden dadurch einerseits zwischen jeweils zwei Zuluftstrahlen Unterdruckzonen und andererseits auch zentral zwischen den divergierenden Zuluftstrahlen eine zentrale Unterdruckzone geschaffen. Im Feuerraum vorliegende sauerstoffarme Abgase werden daher von Aussen in die Unterdruckzonen zwischen die Zuluftstrahlen eingesogen und vermischen sich mit der Zuluft. Diese Zuführung von Rezirkulationsgasen von aussen zur Flamme wird im Folgenden äussere Rezirkulation genannt. Zusätzlich zur äusseren Rezirkulation werden sauerstoffarme Abgase axial und entgegen der Strömungsrichtung der Zuluft bzw. des Zuluft-Abgas-Gemisches in die zentrale Unterdruckzone eingesogen. Diese axiale Zuführung wird im Folgenden innere Rezirkulation genannt.

Die einander im Raum kreuzenden Zuluftstrahlen kreuzen auch eine gemeinsame Mittelachse im Raum. Dank der Neigung der Zuluftstrahlen bezüglich einer die gemeinsame Mittelachse enthaltenden und den Zuluftstrahl schneidenden Ebene bewirken die Zuluftstrahlen eine Rotation der Zuluft um die Mittelachse.

Der Brennerkopf weist eine Stauscheibe auf, mit der ein Zuluftkanal eines Blaubrenners abströmseitig abgeschlossen werden kann. In der Stauscheibe sind wenigstens zwei Öffnungen einander gegenüberliegend, vorzugsweise je nach Brennerleistung drei, vier, fünf, sechs, sieben oder acht Öffnungen ringförmig angeordnet. Bei kleinen Leistungen können gegebenenfalls bis zu 12 Öffnungen vorgesehen sein. Diese sind mit Leitschaufeln zur Leitung der durch die Öffnungen aus dem Zuluftkanal ausströmenden Luft in Form von einander im Raum kreuzenden und divergierenden Zuluftstrahlen ausgerüstet. Zwischen den Leitschaufeln sind Stauschaufeln ausgebildet, um zwischen den Zuluftstrahlen Unterdruckzonen zu erreichen. Stromab der Stauscheibe ist ein Raum vorhanden, in welchem die Zuluftstrahlen ungehindert auseinanderströmen können. Die Leitschaufeln und Stauschaufeln bilden vorzugsweise die letzten luftleitenden Teile vor der Flamme. Eine Flamme ist in der Folge ringsum von den im Feuerraum vorliegenden Abgasen umgeben. Gegebenenfalls kann ein kurzes Rohr um die Stauscheibe herum zur Dosierung der entlang oder nahe der Stauscheibe rezirkulierenden Abgase vorgesehen sein.

Es ist mit diesem Verfahren und dieser Vorrichtung gelungen, die strömungstechnischen und physikalisch-chemischen Voraussetzungen für eine stabile, praktisch stöchiometrische Verbrennung von Heizöl im Wesentlichen unabhängig der Feuerraumform und Feuerraumgrösse zu schaffen. Dabei geschieht die Verbrennung mit äusserst geringer Schadstoffbildung und es sind Brenner mit Leistungen für den Heizleistungsbedarf eines Einfamilienhauses bis hin zu einem solchen von Siedlungen oder Industrieanlagen machbar. Da der Brenner kein Flammrohr besitzt, ist er praktisch wartungsfrei. Die Flamme schwebt gewissermassen in einem Abstand zur Stauscheibe und zur Düse im Feuerraum. Sie ist becherförmig und besitzt sehr weiche, ausgefranste Konturen mit unzähligen Spitzen, die bezüglich der Becherform nach aussen und innen gerichtet sind. Die Verbrennung ist sehr leise und neigt kaum zu Pulsationen. Die gemessenen Schallpegelwerte bei der Verbrennung von Heizöl sind die leisesten überhaupt, verglichen mit den Schallpegelwerten der gebräuchlichsten Gelb- und Blaubrenner.

Eine Strömungsachse eines jeden Zuluftstrahls weist vorteilhaft einen minimalen Abstand zu einer den Zuluftstrahlen gemeinsamen Mittelachse aufweist. Der Abstand der Zuluftstrahlenachsen zur Mittelachse ist überall grösser als Null. Somit schneiden die Strömungsachsen die Mittelachse nicht. Die Strömungsachse ist bezüglich der Mittelachse vorzugsweise geneigt. Dies bewirkt einen Dralleffekt auf die Gas-Strömung im Flammenbereich. Dieser Drall dient dem Halt und der Stabilität der Flamme.

Der Winkel zwischen einer Mittelachse und den divergierenden Zuluftstrahlen kann durch die Winkellage der Leitschaufeln und durch die Winkellage der Stauschaufeln eingestellt werden. Abhängig von diesem Winkel der Zuluftstrahlen ist die Becherform der Flamme mehr oder weniger geöffnet. Bevorzugte halbe Scheitelwinkel eines in die Luftstrahlen eingeschriebenen und diese beim Eintritt in den Feuerraum tangierenden Kegels liegen zwischen 30 und 45 Grad. Die Flammenstabilität ist jedoch auch bei Winkeln von 20 oder 60 Grad noch nicht gefährdet. Die Strömungsachsen der Zuluftstrahlen nehmen einen Winkel zu einer Mantellinie eines die Zuluftstrahlenachse berührenden Kegels oder Zylinders ein. Da die Achsen der Zuluftstrahlen sich nicht in einem gemeinsamen Punkt auf der Mittelachse schneiden, bewirken die Zuluftstrahlen einen Drall um die Mittelachse. Die Zuluftstrahlenachsen liegen theoretisch in einer sich trompetentrichterförmig aufweitenden Rotationsfläche um die Mittelachse. Tatsächlich bildet sich aber wegen des mit dem Abstand zur Stauscheibe zunehmenden Querschnitts der Becherform der Flamme in deren Zentrum eine Unterdruckzone. Diese bewirkt, dass die Zuluftstrahlen und die dazwischen hineingefächerten rezyklierten Abgase keine Trompetentrichterform, sondern eine Tulpenform bilden. Die Zuluftstrahlen sind daher nicht geradlinig sondern rotieren um die Mittelachse, wobei sie bis zur Flammenspitze je nach Neigungswinkel der Zuluftstrahlenachse zur erwähnten Kegelmantellinie eine Rotation von 20 bis 120 Grad, vorzugsweise von etwa 90 Grad um die Mittelachse machen.

Die Zuluftstrahlen beginnen voneinander beabstandet und divergieren. Der minimale Abstand der Strahlenachsen von der Mittelachse kann stromauf, bei oder stromab der Stauscheibe liegen. Der Abstand zwischen den Zentren von zwei benachbarten Zuluftstrahlen ist in der Ebene der Stauscheibe vorteilhaft etwa doppelt so gross wie der mittlere Durchmesser des Querschnitts der Zuluftstrahlen. Diese Verhältnisse sind durch die Grösse der Öffnungen in der Stauscheibe, die Grösse der Stauschaufeln, aber auch die Neigung der Leitschaufeln einstellbar.

Von erwähntem Verhältnis kann in begrenztem Mass abgewichen werden. Es kann der Abstand der Zentren dem sechsfachen Strahldurchmesser, oder aber dem 1,5-fachen Strahldurchmesser entsprechen. Das Verhältnis der Querschnittflächen von Unterdruckzonen und Luftstrahlen kann variiert werden zwischen etwa 1 zu 2 bis 5 zu 1. Das Verhältnis der Querschnittflächen von Unterdruckzonen und Luftstrahlen unterschreitet bzw. übersteigt keinesfalls ein Verhältnis von 1 zu 3 bzw. 8 zu 1. Dabei bilden 70 bis 95%, vorzugsweise 80 bis 90% der Zuluft die Zuluftstrahlen. Die restliche Zuluft strömt gegebenenfalls zentral um einen Zentralkörper, z.B. die Brennstoffdüse, in den Feuerraum. Es kann auch bei grossen Leistungen eine Sekundärluft mit 10 bis 20% Volumenanteil der Zuluft durch einen Ringspalt in der oder um die Stauscheibe von Aussen an die Flamme herangeführt werden. Keinesfalls jedoch sind die Zuluftstrahlen um einen zentralen Zuluftstrahl herum angeordnet.

Um die gewünschte äussere Rezirkulation zu erreichen, scheinen die Dimensionen der Unterdruckzonen bedeutsam zu sein. Bei geringerer äusserster Breite der Stauschaufeln ist ein grösseres Druckgefälle zwischen der Zuluft und dem Feuerraumdruck oder ein grösserer Querschnitt der Unterdruckzonen insgesamt notwendig, um dieselbe Menge an Verbrennungsgas zu rezirkulieren. Eine bevorzugte äusserste Breite an der äusseren Basis von trapezförmigen Stauscheiben beträgt minimal 4 bis 7 und maximal 20 bis 22 mm, besonders bevorzugt 12 bis 18 mm. Einen bevorzugten kleinsten Abstand zwischen runden Öffnungen in einer Stauscheibe beträgt ebenfalls um 15 mm. Je nach Grösse des Durchmessers einer Stauscheibe oder je nach Abstand einander gegenüberliegender Zuluftstrahlen ergibt sich deshalb eine andere Teilung bezüglich Öffnungen und Stauschaufeln. Dabei sind bei grösseren Durchmessern und höheren Drücken der Zuluft geringere Abstände zwischen den Zuluftstrahlen möglich.

Ein dynamischer Überdruck der Zuluft gegenüber dem Feuerraumdruck von wenigstens 4 bis maximal 30 mbar, je nach dem ob der Brenner 20 oder 400 kW leisten muss, erlaubt die erforderlichen Luftmengen und Fördergeschwindigkeiten zu erreichen, die eine Bildung der die Flamme stabilisierenden Unterdruckzonen gewährleisten. Bei noch höheren Leistungen sind auch höhere Überdrücke einzusetzen.

Das erfindungsgemässe Verbrennungsverfahren eignet sich sowohl für Öl oder Gas als auch für Zweistoffbrenner. Gas wird stromauf der Stauscheibe der Zuluft beigemischt. Flüssiger Brennstoff wird vorteilhaft mit einer Düse mit Vollkegelcharakteristik oder Kegelmantelcharakteristik axial eingedüst. Es ist auch eine Düse mit einer Mischung von Vollkegelcharakteristik und Kegelmantelcharakteristik einsetzbar, bei der im Innern des Kegels der Brennstoff weniger dicht versprüht wird, am Rand jedoch dichter. Eine solche Charakteristik ist mit dem Begriff gemischte Charakteristik bezeichnet. Der Kegelscheitelwinkel der Düse misst mindestens 45, vorteilhaft 60 oder mehr und höchstens 90 Grad, vorzugsweise etwa 80 Grad.

Es ist sogar möglich, alternativ oder zusätzlich zum flüssigen und/oder gasförmigen Brennstoff feste Brennstoffpartikel (z.B. Kohlenstaub) der Zuluft beizumischen. Dadurch kann die Leistung des Brenners erhöht werden. Schlüsselkomponente des Verbrennungsverfahrens bildet der Brennerkopf mit integrierter Zuluftführung, wobei an den Brennerkopf stromab kein die seitliche Ausbreitung der Zuluftstrahlen und die äussere Rezirkulation behinderndes Flammrohr anschliesst.

Die Mischtemperatur von Zuluft, Abgas und Brennstoffdampf muss, in einer ersten Phase bis zur vollständigen Verdampfung des Brennstoffes unter der Zündtemperatur dieses Gemisches bleiben - d.h. die Rezirkulationsmenge darf nicht zu gross sein. Eine zu kleine Rezirkulationsmenge würde dagegen eine ungenügende Verdampfung und daher eine suboptimale Verbrennung mit relativ hohen Schadstoffwerten bedeuten. Erst wenn die drei Anteile ein homogenes Gasgemisch gebildet haben, soll mit einer zweiten Rezirkulation möglichst heisser Gase die Zündung eingeleitet werden.

Mit der oben erwähnten ersten Rezirkulation nicht zu heisser Abgase wird die für die Verdampfung erforderliche Wärmeenergie bereitgestellt. Die Zumischung dieses Abgases reduziert den Sauerstoffgehalt des Gemisches und benötigt eine Strömungsstrecke, welche einen Abstand zwischen der Flammenwurzel und der Stauscheibe schafft. Das Mischungsverhältnis bestimmt die Vergasungs- und Verbrennungstemperatur. Der von der Luftführung und der vom eingespritzten Brennstoff erzeugte Impuls erzeugt eine Saugwirkung und führt zu einer ersten äusseren Rezirkulation von heissen Verbrennungsgasen. Dieser Heissgasstrom wird zwischen die Zuluftstrahlen eingesogen. Der erste Rezirkullations-Heissgasstrom bildet in der Folge mit der Zuluft zusammen eine becherförmig sich ausweitende und um ihre Mittelachse drehende Ringströmung. Durch die Ausweitung der laminarturbulenten Scherströmung der zugeführten Zuluft in den Feuerraum und die zwischen die Zuluftstrahlen gefächerten Heissgase entsteht in der Mittelachse eine weitere Unterdruckzone, welche die innere Heissgasrezirkulation bewirkt. Flüssiger Brennstoff wird in die Heissgase der inneren Rezirkulation und in die becherförmige Strömung eingedüst. Die Heissgase der inneren Rezirkulation vermischen sich nach und nach mit der becherförmigen Strömung. Die becherförmige Strömung besteht aus einem zunehmend entflammbaren Gemisch kommt allseitig mit heissen Verbrennungsgasen in Kontakt und vermischt sich mit diesen. Dank dieser Vermischung erhöht sich die Temperatur des Gemisches über die Zündtemperatur. Die Flamme brennt daher mit unzähligen Zungen nach allen Seiten, nach innen und aussen, im Gegenstrom zu einer zweiten Heissgasrezirkulation. Die Verbrennung erfolgt mit blauer Low-NOx-Hohlkegelflamme und NOx-Werten an der Grenze des theoretisch Machbaren und zudem mit niedrigem Schallpegel.

Ein weiterer Vorteil des Brenners und des Verfahrens ist die Verwendbarkeit von Brenner und Verfahren mit Naturgas als Brennstoff. Das Gas kann dabei im Bereich der Stauscheibe, in den Zuluftkanal zwischen Ventilator und Stauscheibe oder auf der Ansaugseite des Ventilators der Zuluft beigemengt werden. Bei Gas als Brennstoff entfällt die Verdampfung des Brennstoffes. Die Vermischung von heissen Rezirkulationsgasen erhöht die Gemischtemperatur bei gleichzeitiger Sauerstoffkonzentrations-Verminderung. Entscheidend ist hier das Erreichen eines vollständig homogenen Gemischs in der Mischzone, bevor die Verbrennung durch die zweite Heissgasrezirkulation in einem Abstand zur Stauscheibe zur Zündung gebracht wird.

Die Brenner für Öl und Gas können in einem Zweistoffbrenner kombiniert werden. Zudem besteht die Möglichkeit für eine weitere Kombination eines Brennstoffes, zum Beispiel Kohlestaub, bei Feuerungsanlagen mit grossen Leistungen.

Die stabilen internen Strömungsverhältnisse haben eine sehr ruhige, nicht-flackernde Flamme zur Folge, was die Lärmemissionen und die Anregung von Kamindruckpulsationen entscheidend herabsetzt.

Ein Brennerkopf zum Anordnen am Ende eines Zuluftkanals eines Blaubrenners weist eine den Zuluftkanal abströmseitig abschliessenden Stauscheibe auf. In der Stauscheibe sind eine Mehrzahl von voneinander beabstandeten Öffnungen vorhanden, welche auf einem Ring angeordnet sind. Diese dienen zur Aufteilung eines überwiegenden Teils, d.h. über 70% der Zuluft in Zuluftstrahlen. An den Öffnungen sind Leitschaufeln vorgesehen. Diese dienen dem Leiten jedes durch eine Öffnung aus dem Zuluftkanal ausströmenden Zuluftstrahls. Sie leiten den Zuluftstrahl in eine Richtung, die bezüglich der Richtung der anderen Zuluftstrahlen divergiert. Zwischen den Leitschaufeln sind Stauschaufeln ausgebildet. Mit den Stauschaufeln werden zwischen den Zuluftstrahlen Unterdruckzonen erreicht. Damit die Gasströmung, in welcher sich die Flamme entwickelt, sich ungestört entwickeln kann, sind die Leitschaufeln und die Stauschaufeln in Strömungsrichtung vorteilhaft die letzten vor der Flamme angeordneten strömungsleitenden Teile.

Vorteilhaft sind die Stauschaufeln und die Leitschaufeln einstückig an der Stauscheibe ausgebildet. Die Stauschaufeln sind mit Vorteil trapezförmig ausgebildet. Vorzugsweise sind die Leitschaufeln an eine Trapezseite der Stauschaufeln anschliessend ausgebildet. Dadurch können Stauschaufeln, Leitschaufeln und die gesamte Stauscheibe aus einem einzigen Stücke Blech geschnitten und geformt werden. Die Produktion der Stauscheibe ist daher sehr einfach. Die Leitschaufeln schliessen vorteilhaft entlang einer Kante, insbesondere einer Biegekante, an die Stauschaufeln an. Die Leitschaufeln und die Stauschaufeln schliessen dabei an dieser Kante zweckmässigerweise einen Winkel zwischen 100 und 160 Grad, vorzugsweise zwischen 110 und 140 ein.

Die Öffnungen sind vorteilhaft um einen Zentralkörper herum ausgebildet. Der Zentralkörper ist bei einem Ölbrenner oder einem Zweistoffbrenner die Öldüse. Bei einem Gasbrenner ist der Zentralkörper ohne weitere Funktion. Der Zentralkörper hilft, eine zentrale Unterdruckzone zu schaffen und führt die Luft bereits im Zuluftkanal. Die Leitschaufeln den begleiten Zentralkörper in Strömungsrichtung der Zuluft. Dabei schliesst der den Zentralkörper begleitenden Rand der jeweiligen Leitschaufel einen Winkel zu einer Mantellinie des Zentralkörpers ein.

Vorteilhaft liegt die Leitschaufel jedoch nicht vollständig am Zentralkörper an, so dass um die Brennstoffdüse herum ein feiner Ringspalt vorliegt Dieser erlaubt durch den Ringspalt eine geringe Menge Zuluft dem Brennstoffstrahl zuzuführen, die für das Startverhalten des Brenners vorteilhaft ist.

Ein Blaubrenner mit einem Zuluft-Ventilator, einem daran anschliessenden Zuluftkanal, einer Brennstoffzuführung und einer elektrischen Zündung ist mit einem Brennerkopf ausgerüstet. Ein solcher Brenner weist die für den Brennerkopf spezifischen Vorteile auf. Der Zuluftventilator ist der Brennerleistung entsprechend dimensioniert. Die Brennstoffzuführung kann durch eine Gaszuführung vor der Stauscheibe und/ oder durch eine Öldüse im Zentrum der Stauscheibe gewährleistet sein.

Ein solcher Brenner ist zweckmässigerweise in einen Heizkessel eingebaut. Der Heizkessel besitzt einen Kesselraum, der vorteilhaft durch einen Wärmetauscher unterteilt ist in einen zentralen Feuerraum und einen den Feuerraum parallel zur Einströmungsrichtung der Zuluft ummantelnden Abgasraum. Vorteilhaft ist der Wärmetauscher ein Spaltwendelwärmetauscher. Mit Spaltwendelwärmetauschern wird eine hohe Ausbeute an Konvektionswärme erreicht Ein solcher ist daher besonders geeignet für blau brennende Flammen, welche eine geringe Wärmestrahlung aufweisen.

Vorteile des Verfahrens und des Brennerkopfes sind insbesondere:

• die niedrigen Herstellungskosten,

    o da ein Flammbecher oder Flammrohr und generell feuerraumseitig jegliche Verschleissteile, wie Störkörper-Einbauten etc. entfallen und
    o dank einer sehr einfachen Konstruktion für die Luftführung,

• die hohe Servicefreundlichkeit,

    o dank Ausbleiben einer Verschmutzung des Brennerkopfes und
    o dank dem im Feuerraum keine Verschleissteile vorliegen,

• die äusserst niedrigen Schadstoffwerte: NOx bei Öl ca. 40 mg/kWh NOx bei Gas ca. 20 mg/kWh

Im Folgenden wird die Erfindung an Ausführungsbeispielen anhand der Figuren genauer erläutert. Es zeigt:

Fig. 1    einen Längsschnitt durch einen Gelbbrenner gemäss dem Stand der Technik,

Fig. 2    eine Darstellung des Luftmusters bei einem derartigen Gelbbrenner,

Fig. 3    einen Längsschnitt durch einen Brennerkopf in einem Brennerrohr, ohne einen die erste Rezirkulation dosierenden Flammbecher,

Fig. 4    einen Längsschnitt durch einen Brennerkopf in einem Brennerrohr, mit einem die erste Rezirkulation dosierenden Flammbecher,

Fig. 5    eine perspektivische Ansicht einer Blende mit vier Öffnungen und einer dazwischen platzierten Brennstoffdüse,

Fig. 6    eine perspektivische Ansicht einer Blende mit vier Öffnungen und einer dazwischen platzierten Brennstoffdüse, und mit schematisch eingezeichneten Zuluftstrahlen,

Fig. 7      einen Längsschnitt durch einen Brennerkopf in einem Brennerrohr, mit einer Blende mit fünf kreisrunden Öffnungen,

Fig. 8      eine Frontalansicht des Brennerkopfes gemäss Figur 7,

Fig. 9      eine Blende mit sechs trapezförmigen Öffnungen und sechs trapezförmigen Stauschaufeln dazwischen,

Fig. 10      einen Querschnitt durch die Blende gemäss Figur 9, bei der die Stauschaufeln in einer Ebene liegen,

Fig. 11      einen Querschnitt durch die Blende gemäss Figur 9, bei der die Stauschaufeln pyramidal aufgebogen sind,

Fig. 12      einen Längsschnitt durch einen Brennerkopf eines Gasbrenners mit schematischer Darstellung der Strömungen von Frischluft und heissen Abgasen,

Fig. 13      einen Längsschnitt durch einen Brennerkopf eines Ölbrenners mit schematischer Darstellung der Strömungen von Frischluft und heissen Abgasen,

Fig. 14      einen Längsschnitt durch einen Heizkessel und einen Brenner mit einem Brennerkopf gemäss Figur 13,

Fig. 15      einen Längsschnitt durch einen kurzen Heizkessel mit einem Wendelspaltwärmetauscher und einem Brenner mit einem an die räumlichen Gegebenheiten angepassten Brennerkopf.

Einander in der Funktion etwa entsprechende Teile sind in den Figuren mit denselben Bezugsziffern bezeichnet, selbst wenn deren Form unterschiedlich ist.

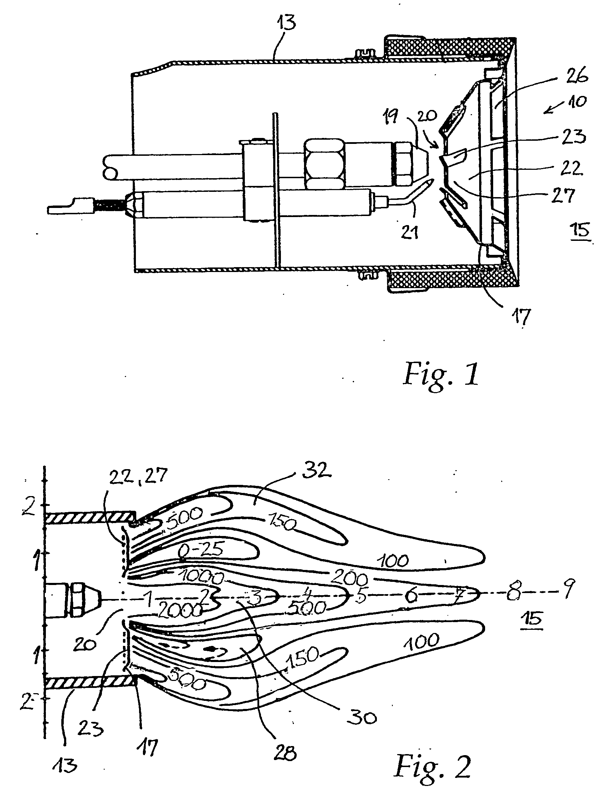

In Figuren 1 und 2 sind ein Längsschnitt durch einen Gelbbrenner 10 und eine Darstellung der Strömungen im Bereich der Flamme eines solchen Gelbbrenners 10 dargestellt. Die Stauscheibe 17 des Gelbbrenners 10 gemäss Figur 1 unterscheidet sich in der Form von der in Figur 2 dargestellten Stauscheibe 17. Dennoch ist das Strömungsbild bei einem in Fig. 1 dargestellten Brenner 10 sehr ähnlich dem in Figur 2 dargestellten Strömungsbild.

Bei dem Gelbbrenner 10 gemäss Figur 1 ist ein Brennerrohr 13 und eine das Brennerrohr 13 abströmseitig vor dem Feuerraum 15 abschliessende Stauscheibe 17 geschnitten dargestellt. Im Brennerrohr 13 sind eine Öldüse 19 und zwei (dargestellt ist lediglich eine) Zündelektrode 21 angeordnet. Die Stauscheibe 17 besitzt eine zentrale Öffnung 20, um diese Öffnung herum ein Stauring 22 mit acht Leitschaufeln 23, und um den Stauring 22 herum eine Ringöffnung 26. Zwischen den Leitschaufeln 23 sind grosse Stauschaufeln 27 angeordnet, die zusammen mit einem äusseren Bereich des Staurings 22 eine ringförmige Unterdruckzone 28 schaffen (Figur 2). Im Zentrum der ringförmigen Unterdruckzone 28 strömt der Hauptanteil der Zuluft in einem scharfen Zuluftstrahl 30 in den Feuerraum 15 ein. Um die Unterdruckzone 28 herum fliesst ein Zuluftmantel 32 in den Feuerraum 15. Aufgrund der Druckunterschiede und Unterschiede in der Fliessgeschwindigkeit der Zuluft ergeben sich Rezirkulationsströmungen 34 am inneren Rand der Unterdruckzone 28. Durch die schmalen Schlitzöffnungen 36 zwischen den Leitschaufeln und den Stauschaufeln strömt eine geringe Zuluftmenge in die Unterdruckzone und bewirkt eine Rotation der Gase in der Unterdruckzone 28 um den zentralen Zuluftstrahl 30. In den Zuluftstrahl 30 wird der Brennstoff eingedüst und teilweise mit den Rezirkulationsströmungen 34 in der Unterdruckzone verwirbelt. In der Unterdruckzone verbrennt der Brennstoff unter Sauerstoffmangel. Diese Strömungs- und Druckverhältnisse halten die Flamme an der Stauscheibe. Es sind daher keine weiteren Massnahmen erforderlich, um eine stabile Flamme zu erhalten. Ein solcher Brenner brennt jedoch gelb und mit hohen Verbrennungstemperaturen und hohen Schadstoffemissionswerten.

Mit der Erfindung ist es nun gelungen, Druck- und Strömungsverhältnisse bei einem Blaubrenner 11 zu schaffen, welche eine stabile, leise und blau brennende Flamme im Feuerraum 15 schwebend festhalten.

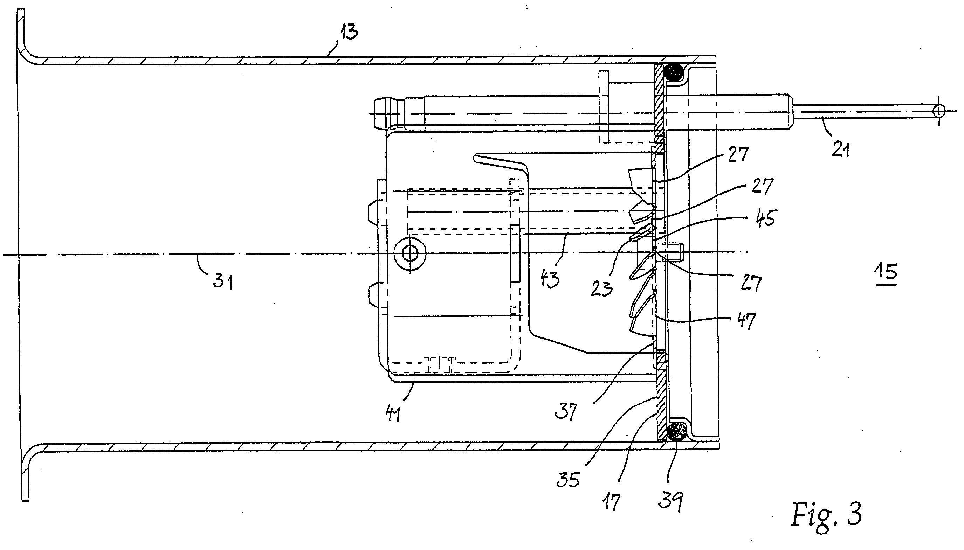

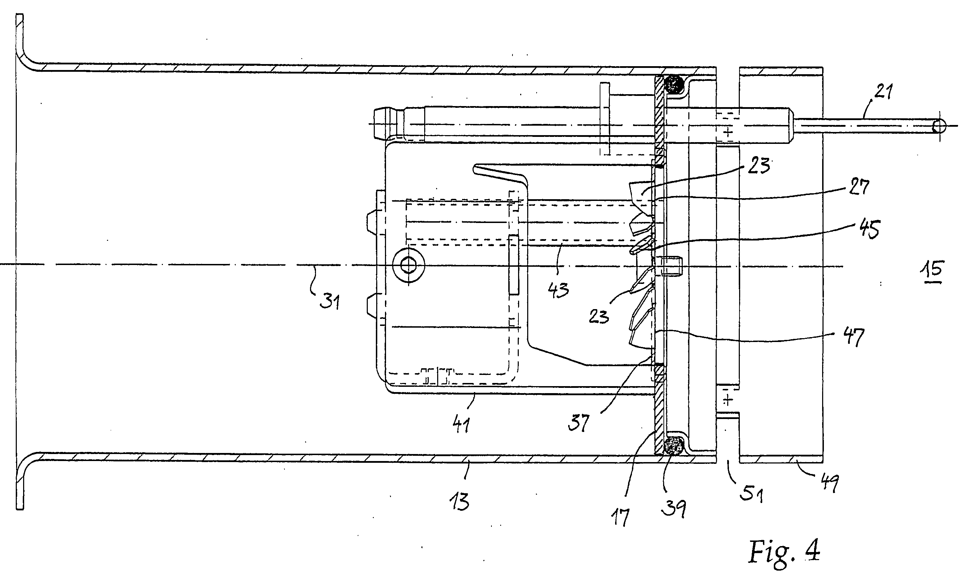

In den Längsschnitten durch zwei Brennerrohre 13 gemäss den Figuren 3 und 4 sind keine Öldüsen 19 dargestellt. Die Lage der Öldüse 19 geht jedoch aus späteren Figuren hervor. Das Brennerrohr 13 gemäss Figur 3 und 4 bildet einen Zuluftkanal für Frischluft und allenfalls Naturgas. Auf der Achse 31, welche als Symmetrieachse oder Flammenachse bezeichnet werden kann, liegt die Öldüse mit der Düsenöffnung etwa in der Ebene der Stauscheibe 17.

Das Brennerrohr 13 ist abströmseitig mit einer Stauscheibe 17 abgeschlossen. Die Stauscheibe 17 ist zusammengesetzt aus einem Haltering 35 mit einer zentralen Öffnung und einem die zentrale Öffnung des Halteringes 35 abdeckende Blende 37. Der Haltering ist in Strömungsrichtung der Zuluft an einen Dichtring 39 am abströmseitigen Ende des Brennerrohres 13 angeschlagen. Am Haltering 35 sind zwei Zündelektroden 21 (in den Figuren 3 und 4 ist jeweils lediglich eine gezeichnet) und eine Halterung 41 für die Brennstoffdüse 19 (nicht dargestellt). Die Halterung 41 ist nicht geschnitten gezeichnet. Am Haltering 35 ist zudem ein Rohr 43 zur Flammenüberwachung angebracht.

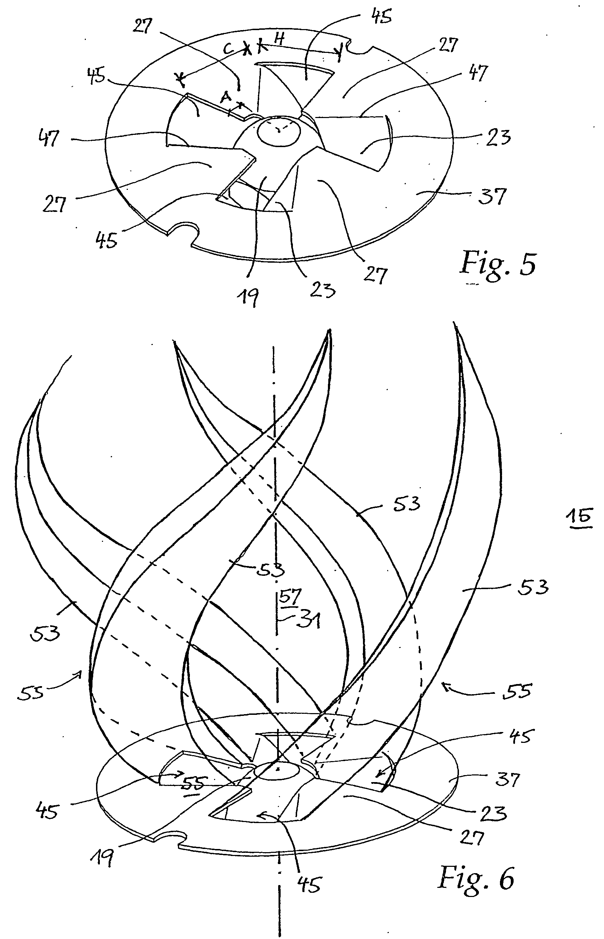

Die Blende 37 ist in Strömungsrichtung an den Haltering angeschlagen und daran festgeschraubt. Die Blende 37 ist eine etwa kreisrunde Scheibe mit einer zentralen Öffnung für die Spitze der Brennstoffdüse 19 (vergleiche Figur 5). In einem Ring um die zentrale Öffnung herum ist das Blech, aus dem die Blende 37 gefertigt ist, mit einem Laser zugeschnitten. Dabei sind zwölf Lamellen ausgeschnitten, die zu Leitschaufeln 23 umgebogen werden können. In Figuren 3 und 4 sind jeweils die Hälfte der Leitschaufeln 23 sichtbar. Diese Leitschaufeln 23 sind jeweils am Rand einer Öffnung 45 angeordnet. Die Öffnungen 45 bilden abwechselnd mit zwischen den Öffnungen 45 angeordneten Stauschaufeln 27 einen Ring um die Brennstoffdüse herum. Die Leitschaufeln 23 sind über etwa radial sich erstreckende Biegekanten 47 mit den Stauschaufeln 27 verbunden. Die Leitschaufeln 27 sind derart zugeschnitten, dass in umgebogenem Zustand der Leitschaufel eine innere Schaufelkante etwa parallel zu einer Aussenform der Brennstoffdüse 19 verläuft. Die Neigung der Leitschaufeln zu den Stauschaufeln liegt in den in den Figuren 3 bis 6 dargestellten Beispielen bei etwa 45 Grad. Die Stauschaufeln 27 liegen in einer gemeinsamen Ebene.

In Figur 4 ist dieselbe Anordnung wie in Figur 3 dargestellt, jedoch mit einem Unterschied: In Figur 4 ist zusätzlich ein kurzes Flammrohr zur Dosierung der Menge an rezirkuliertem Heissgas vorhanden. Dieses Flammrohr 49 besitzt denselben Durchmesser wie das Brennerrohr 13. Es ist einstückig mit dem Brennerrohr 13 gefertigt. Zwischen dem Flammrohr 49 und dem Brennerrohr 13 ist ein Ringspalt 51 ausgebildet. Dieser Ringspalt dosiert die Rezirkulation der Abgase. Ein solches Flammrohr 49 kann bei dem erfindungsgemässen Brenner vorgesehen sein. Es ist jedoch nicht erforderlich. Durch die Wahl und Einstellung der Blende 37 ist in praktisch jedem Feuerraum 15 und bei jeder Leistung eine Stabilisierung der blauen Flamme auch ohne Flammrohr 49 zu erreichen.

Die Blende 37 in Figur 5 besitzt um die zentrale Düsenöffnung herum vier Öffnungen 45. zwischen diesen Öffnungen 45 sind vier Stauschaufeln 27 angeordnet. Die Stauschaufeln 27 sind trapezförmig. Die Trapezbasis liegt auf einem äusseren Kreisbogen. Die beiden konvergierenden Trapezseiten verlaufen etwa radial. Die Öffnungen besitzen praktisch den gleich grossen Querschnitt wie die Stauschaufel 27. Die Leitschaufeln 23 besitzen zwar eine grössere Fläche als die Stauschaufeln 27, jedoch ist die Öffnung 45 kleiner als die Fläche der Leitschaufeln 23, da die Leitschaufeln 23 nicht senkrecht zur Blendenebene stehen. Die Biegekante 47 zwischen Stauschaufel 27 und Leitschaufel 23 bildet eine der konvergierenden Trapezseiten. Die andere Trapezseite der Stauschaufel 27 wird durch eine Schneidkante gebildet. Diese Schneidkante und die Biegekante 47 konvergieren bezüglich der Stauschaufel 27 mehr als bezüglich der Öffnung 45 zwischen zwei Stauschaufeln 27.

In Figur 6 ist die in Figur 5 dargestellte Blende in einem flacheren Blickwinkel dargestellt und mit schematisch dargestellten Zuluftstrahlen versehen. Die Blende 37 besitzt vier Öffnungen 45, aus denen im Betrieb des Brenners Zuluft ausströmt. Die Zuluft wird durch die Stauschaufeln 27 und die Leitschaufeln 23, sowie die Brennstoffdüse 19 (oder einen anderen Zentralkörper) in vier Zuluftstrahlen 53 aufgeteilt. Diese Zuluftstrahlen 53 sind als transparente Körper dargestellt. Sie treten in einem von 90 Grad abweichenden Winkel zur Ebene der Blende 37 und der Stauscheibe 17 durch die Öffnungen 45 in der Blende 37 hindurch. Die Zuluftstrahlen 53 reissen dabei hinter den Stauschaufeln 27 vorliegende Gase mit. Der dadurch entstehende Unterdruck saugt aus der Umgebung Gase an, so dass sich jeweils ein langsamerer Gasstrom bildet zwischen jeweils zwei Zuluftstrahlen 53. Diese Gasströme werden im Wesentlichen durch Heissgase gebildet, die Abgase der Verbrennung und daher sauerstoffarm sind. Zwischen den laminaren Strömungen von Zuluft und Heissgasen entstehen Mischzonen. In diesen Mischzonen werden Zuluft und Abgase miteinander vermischt. Die in die Unterdruckzonen einströmende Zuluft aus den Zuluftstrahlen 53 verwirbeln mit den Heissgasen. Die Zuluftstrahlen 53 werden daher aufgebraucht. Daher sind sie als in Spitzen endende Arme dargestellt. Da die Zuluftstrahlen 53 divergieren, entsteht nicht nur jeweils eine periphere Unterdruckzone 55 zwischen zwei Zuluftstrahlen, sondern auch eine zentrale Unterdruckzone 57 zwischen den Zuluftstrahlen 53 auf der Achse 31. Diese Unterdruckzonen 55,57 verhindern ein geradliniges Ausbreiten der Zuluftstrahlen 53. Die Unterdruckzonen halten diese Zuluftstrahlen 53 zusammen und bewirken daher, dass die Flamme tulpenförmig brennt.

Der flüssige Brennstoff wird in die sich verwirbelnden Gasströme gesprüht. Dabei ist es unerheblich, dass die Öltröpfchen sowohl in die Heissgase als auch in die Zuluftströme gelangen. Die Vergasung und die Verdunstung (je nach Temperatur der Umgebungsgase) erfolgt in beiden Fällen vor der Entflammung des Brennstoffs. Die Flamme brennt daher blau. Es wird vermutet, dass innerhalb der Zuluftstrahlen die Gastemperatur und in den Heissgasen die Sauerstoff- und die BrennstoffKonzentration erst dann genügend hoch sind, wenn der Brennstoff bereits gasförmig vorliegt Die Temperatur der Gase nimmt mit Abstand von der Stauscheibe 17 dank dem Zuströmen von Heissgasen in einer sekundären Rezirkulation zu. Die sekundäre Rezirkulation geschieht von innen und von aussen zur Becherform der Flamme hin.

Dank den entstehenden Druckverhältnissen mit den zur Stauscheibe 17 zurückziehenden peripheren Unterdruckzonen einerseits, die durch die ausgeblasene Zuluft aufgebaut werden, und durch die zentrale Unterdruckzone andererseits, die durch das Auseinanderströmen der Zuluftstrahlen und der mitgerissenen Heissgase erzeugt wird, baut sich ein Gleichgewicht der Unterdruckzonen auf. In diesem Gleichgewicht erfolgt eine Verwirbelung, welche die Dynamik des starken thermodynamischen Prozesses dominiert und der Flamme Stabilität verleiht. Der thermodynamische Prozess läuft dabei nicht in erster Linie von hinten nach vorne in Ausströmungsrichtung ab, sondern vom Flammeninnern in Richtung Flammenspitze. Die Flammenspitze liegt aber nicht auf einer Flammenachse. Es liegen vielmehr unzählige Flammenspitzen auf der Innenseite und der Aussenseite der becherförmigen Flamme vor. Dadurch, so muss vermutet werden, hebt sich der Einfluss des thermodynamischen Prozess auf die Flammenstabilität teilweise auf, so dass die Dynamik der Strömungen genügt, die Flamme sicher zu halten.

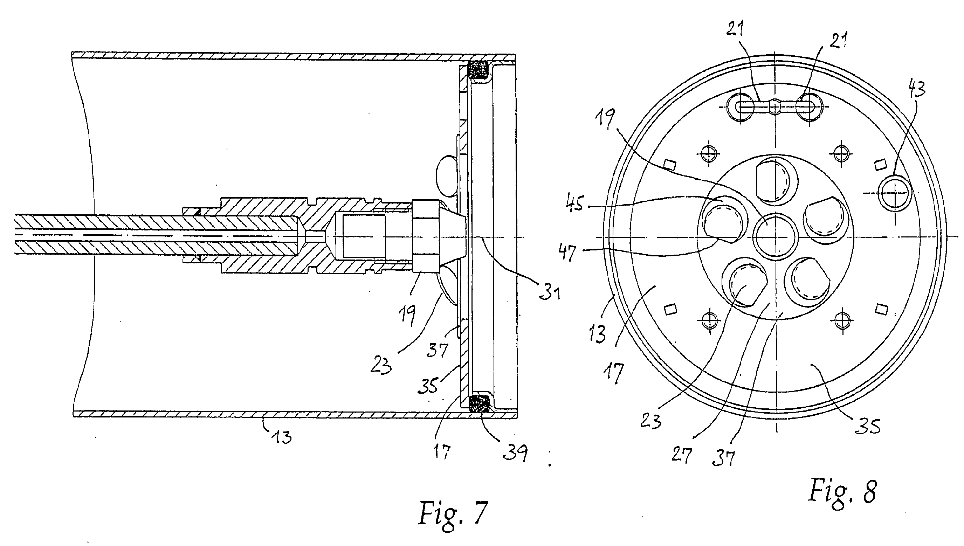

Es ist daher anzunehmen, dass die Form der Öffnungen eine untergeordnete Rolle spielt. So ist in Figuren 7 und 8 ein Brennerkopf dargestellt, bei welchem fünf Öffnungen 45 in der Blende 37 jeweils kreisrund ausgestanzt sind. Die Stanzung umfasst eine Kreislinie von ca. 300 Grad. Über einen Winkel von 60 Grad liegt jeweils eine Biegekante 47 vor, entlang welcher die Leitschaufel 23 mit der Blende 37 verbunden ist. Die Richtung der durch diese Öffnungen 45 tretenden Zuluftstrahlen muss dank den Leitschaufeln 23 in einem Winkel zu den Öffnungsachsen (nicht dargestellt) der Öffnungen in der Blende 37 stehen. Die Zuluftstrahlen sind zudem tangential zu einem die Öffnungsachsen enthaltenden Kreiszylinder gerichtet, daher liegt die Stelle der Zuluftstrahlen mit dem geringsten Abstand zur Achse 31 in der Ebene der Blende 37.

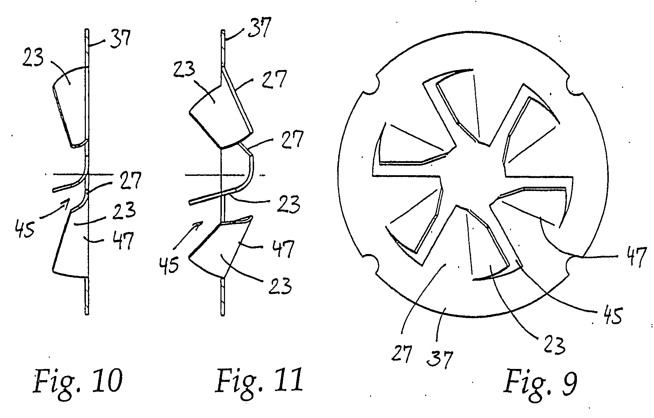

In Figuren 9 bis 11 sind zwei Blenden 37 dargestellt, die sechs Öffnungen 45 aufweisen. Die Blenden sind in der Art der Blenden gemäss Figuren 3 bis 6 aus einem Blechstück gebildet Die Leitschaufeln 23 sind über eine Biegekante 47 mit den Stauschaufeln 27 verbunden. Die sechs Stauschaufeln 27 sind in Figur 9 und 10 ebenflächig und in einer gemeinsamen Ebene angeordnet dargestellt. In Figur 11 jedoch sind die Stauschaufeln 27 in Strömungsrichtung der Zuluft aufgebogen, Dadurch neigen sich die sich ergebenden Zuluftstrahlen nach aussen. Die primäre Rezirkulation der Heissgase entlang der Stauscheibe 17 erfolgt durch die Abwinkelung der Stauschaufeln 27 mit weniger Wirbelbildung bis tiefer zwischen die Zuluftstrahlen hinein.

Die Leitschaufeln 23 sind gegen die Strömungsrichtung der Zuluft gebogen. Dadurch ergeben sich Abreisskanten für die Zuluftströmung, an denen ein Unterdruck entsteht. Zentral ist in der Blende 37 eine Düsenöffnung vorgesehen. Diese ist vorteilhaft so gross dimensioniert, dass rings um die Düse ein feiner Luftspalt vorliegt.

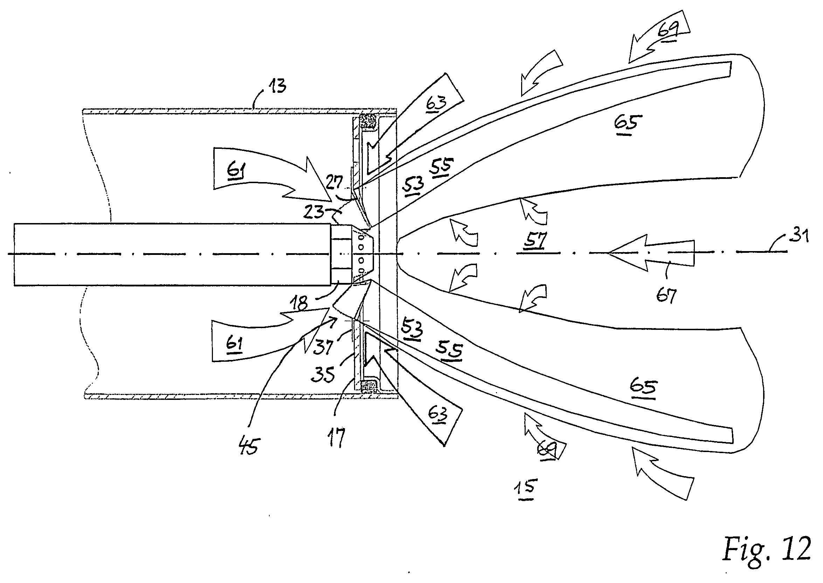

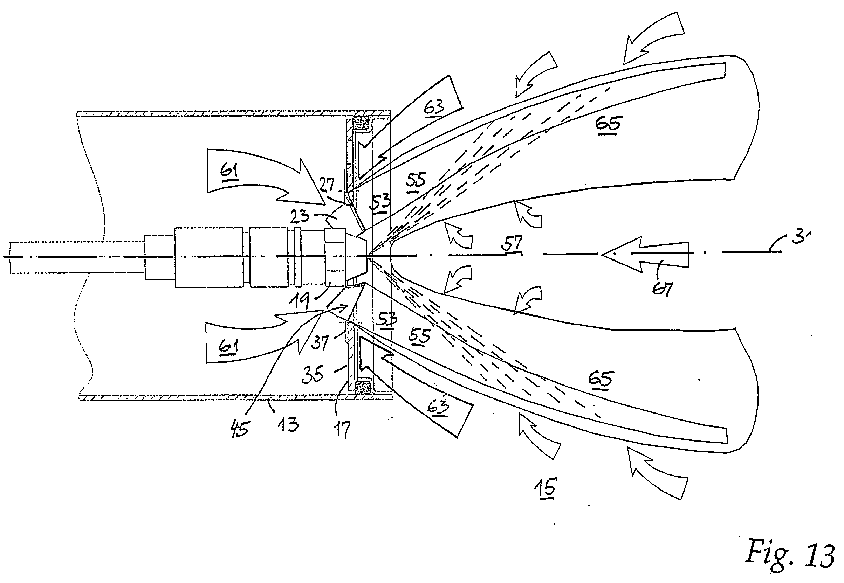

In den Figuren 12 und 13 ist das Strömungsbild und Flammenbild der Gasflamme und der Ölflamme schematisch dargestellt. Beide Strömungsbilder sind identisch. Lediglich die Brennstoffzuführung unterscheidet sich. In Figur 12 ist die Brennstoffzuführung durch eine Gasdüse 18 in der Ebene der Stauscheibe 17 gebildet. Die Gasaustrittöffnungen sind in einem Winkel von 45 Grad zur Achse 31 gerichtet. Das Gas tritt daher in die an der Gasdüse 18 vorbeistreichende Zuluft hinein und gelangt mit den Zuluftstrahlen 53 in die Flamme. Gas kann jedoch auch stromauf der Stauscheibe der Zuluft zugeführt werden.

Im Gegensatz dazu wird Öl direkt in den Feuerraum 15 eingespritzt. Das Öl gelangt zuerst in den Bereich der zentralen Unterdruckzone 57. In den Heissgasen in der zentralen Unterdruckzone 57 verdunstet und verdampft ein Grossteil des Brennstoffs in sauerstoffarmer Umgebung. Jeweils ein untergeordneter Anteil des Brennstoffes gelangt in Tröpfchenform in die Heissgase der peripheren Unterdruckzonen 55 und vermutlich auch in die Zuluft der Zuluftstrahlen 53. Trotzdem, wie vermutet werden muss, Öltröpfchen in die Zuluftstrahlen 53 gelangen, entsteht keine gelbe Flamme. Die Flamme brennt äusserst ruhig, blau und stabil. Es muss angenommen werden, dass die in die Zuluftstrahlen gelangenden Öltröpfchen bereits aufgeheizt sind, so dass sie sehr rasch darin verdunsten, dass die Temperatur der Zuluft in diesem Bereich unter der Zündtemperatur liegt, und dass der Anteil des in die Zuluftstrahlen eindringenden, noch nicht vergasten Brennstoffes gering ist.

Wie aus den Darstellungen der Figuren 12 und 13 ersichtlich ist, gelangt die Zuluft 61 aus dem Zuluftkanal oder Brennerrohr 13 durch die Öffnungen 45 in der Blende 37 in Form von Zuluftstrahlen 53 in den Feuerraum 15. Die Zuluftstrahlen 53 sind dank den Leitschaufeln 23 gerichtet. Die Stauschaufeln 27 zwischen den Öffnungen 45 schaffen periphere Unterdruckzonen 55 zwischen den Zuluftstrahlen 53, in welche hauptsächlich von Aussen Heissgase rezirkulieren. Die Zuluftstrahlen 53 und diese primär rezirkulierten Heissgase 63 in den peripheren Unterdruckzonen 55 bilden eine laminar-turbulente Scherströmung, vermischen sich und bilden eine becherförmige, rotierende Mantelströmung 65 mit einer zentralen Gegenströmung 67 von sauerstoffarmen Heissgasen. Die Verwirbelung der becherförmigen Mantelströmung 65 mit den sekundär rezirkulierten Heissgasen 67,69 aus der zentralen Unterdruckzone 57 und aus der Peripherie führt zu einer homogenen Vermischung von Heissgasen, Zuluft und Brennstoffgasen, die eine sehr harmonische Verbrennung erlauben.

Die in der Flamme auftretende Expansion der Gase kann sich zur Achse 31 hin und nach Aussen ausdehnen. Die auf Grund der thermischen Entwicklung entstehende Dynamik entspannt sich daher vorwiegend ringförmig und radial nach Innen und Aussen. Die auftretenden Kräfte sind somit zu einem grossen Anteil einander entgegengerichtet. Dadurch bleibt die axial sich entspannende Dynamik zwischen den Zuluftstrahlen 53 und den Unterdruckzonen 55,57 für den Flammenhalt dominant über die radial sich entwickelnden thermodynamischen Abläufe.

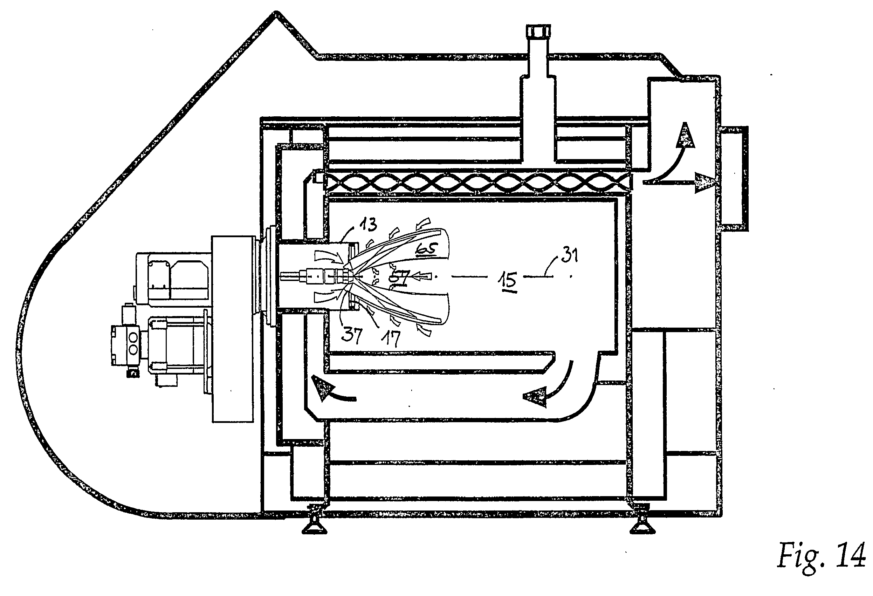

In Figur 14 ist der Brennerkopf gemäss Figur 13 in einem konventionellen Heizkessel eingesetzt. Der Brenner ist mit einem Ventilator, einer Ölpumpe und einer Zündelektronik ausgerüstet. Die durch die eingeblasene Zuluft im Feuerraum 15 des Kessels erreichte Dynamik der Strömungen ist bereits oben beschrieben. Die Form und Grösse des Feuerraums 15 ist bei dieser Beschreibung nicht berücksichtig. Dies kommt daher, das die Form und die Grösse des Feuerraums 15 lediglich eine Bedingung erfüllen muss: Der Feuerraum muss der Flamme Raum zur Entfaltung zu bieten. Bestimmt beeinflussen die Druckverhältnisse und andere Parameter des Feuerraums und des Heizkessels das Verhalten der Flamme und die Verbrennung. Es ist jedoch bisher kein Kessel gefunden worden, in welchem die stabile, schadstoffarme Verbrennung von Öl oder Gas mit dem beschriebenen Brennerkopf nicht gelungen wäre. Die Flamme brennt sogar im freien Raum und auch unter räumlich sehr engen Bedingungen.

Der Heizkessel gemäss Figur 14 ist für eine lanzenförmige Flamme ausgelegt und bietet daher zu viel Raum in Richtung der Achse 31. Die Verbrennung erfolgt jedoch davon unberührt sehr sauber, ruhig und stabil. Die Abgase werden gewendet und durch einen Wärmetauscher hindurch dem Kamin zugeführt

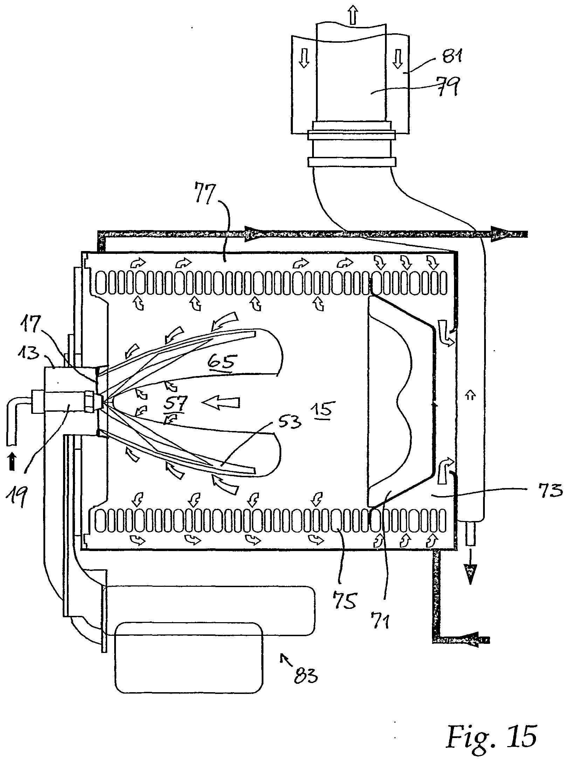

In Figur 15 ist ein sehr kurzer Heizkessel dargestellt. Gegenüber des Brennerkopfes ist ein Flammenumlenkteil 71 angeordnet. Die kurzen Abmessungen des Feuerraums 15 wurden bisher dadurch erreicht, dass die Flamme mit dem Flammenumlenkteil 71 zu ihrer Wurzel zurückgelenkt wurde. Dieses Flammenumlenkteil 71 ist bei der gezeigten Zusammenstellung des Kessels jedoch nicht mehr notwendig. Es muss lediglich noch den Feuerraum 15 von einer Rauchgaskammer 73 hinter dem Flammenumlenkteil 71 abtrennen. Die mit dem erfindungsgemässen Verfahren gebildete Flamme brennt becherförmig radial und weist eine sehr kurze Längenentwicklung auf. Sie ist daher auch für sehr kurze Feuerräume 15 geeignet.

Bei dem in Figur 15 dargestellten Heizkessel, einem Wandgerät, ist eine Spaltwendel-Wärmetauscher 75 vorgesehen, der den Feuerraum 15 zylindrisch ummantelt Zwischen dem Spaltwendel-Wärmetauscher 75 und der Kesselwandung ist ein zylindermantelförmiger Abgasraum 77 ausgebildet. Dieser Abgasraum ist durch die ersten Windungen des Spaltwendel-Wärmetauschers von der Rauchgaskammer 73 getrennt. Die Rauchgaskammer 73 besitzt eine Öffnung in einen Kaminzug 79. Der Kaminzug 79 besitzt ein Kunststoffrohr mit integriertem Frischluftkanal 81.

Die Frischluft wird durch den Frischluftkanal 81 im Gegenstrom zum Rauchgas im Kaminzug 79 angesogen. Mit dem Ventilator 83 wird die Zuluft durch ein sehr kurzes Brennerrohr 13 gegen die Stauscheibe 17 geführt. Mit der Blende 37 in der Stauscheibe werden Zuluftstrahlen 53 geformt, die in den Feuerraum 15 einblasen. Im Windschatten der Stauschaufeln 27 der Blende 37 bilden zwischen den Zuluftstrahlen 53 periphere Unterdruckzonen und zentral eine zentrale Unterdruckzone 57. Das eingedüste Heizöl verdunstet/verdampft in sekundär rezirkulierten den Heissgasen der zentralen Unterdruckzone 57 und wird zusammen mit diesen Heissgasen in die tulpenförmige Mantelströmung 65 aus Zuluft und primär rezirkulierten Heissgasen eingemischt und verbrennt in einer blauen Flamme. Die entstehenden Heissgase rezirkulieren teilweise und entweichen zwischen den Spaltwendeln des Wärmetauschers 75 aus dem Feuerraum 15 in den Abgasraum 77. Dabei geben sie einen Grossteil ihrer Wärmeenergie durch Konvektion an den Wärmetauscher ab. Diese bereits gekühlten Abgase durchqueren den Spaltwendel-Wärmetauscher 75 ein zweites Mal und treten in die Rauchgaskammer 73 ein. Da die Zuleitung für das im Wärmetauscher fliessende Medium im Bereich der Rauchgaskammer 73 und die Ableitung des Mediums im Bereich des Brennerkopfes vorgesehen ist, durchströmen die Abgase zuerst einen heisseren Bereich des Wärmetauschers und bei der zweiten Querung einen kühleren Bereich des Wärmetauschers. Anschliessend gelangen die kühlen Rauchgase in den Kaminzug und erwärmen vor ihrem Austritt in die Atmosphäre die angesogene Frischluft.

In der folgenden Tabelle sind Parameter von sieben Beispielen von Blenden von erfindungsgemässen Brennerköpfen aufgeführt. Die Blenden sind in der Art der Blende gemäss Figur 5 ausgebildet. Die Brennerköpfe sind auf Leistungen von 16 bis 700 kW ausgelegt. Die Öffnungsringe der Blenden weisen einen äusseren Durchmesser von 27 bis 80 mm und daher einen Umfang von 84,8 bis 251,2 mm.

Bei Versuchen mit Brennern für grosse Leistungen hat sich gezeigt, dass eine kleinere Anzahl von Öffnungen und Stauschaufeln einer grösseren Anzahl vorzuziehen ist. Die Anzahl von vier Öffnungen und vier Stauschaufeln hat sich als für alle Leistungen geeignet erwiesen. Daher ist bei allen Beispielen eine Viererteilung verwendet worden. Die Masse der Stauschaufeln und der Öffnungen zwischen den Stauschaufeln sind wie folgt erfasst. Die Bezeichnungen sind in Figur 5 angegeben. Mit A ist die Länge der kleineren Trapezseite der Stauschaufel 27 bezeichnet, welche an die Brennstoffdüse anschliesst. Mit C ist die Basisbreite des Trapezes der Stauschaufeln bezeichnet. Mit H ist die grösste Weite zwischen zwei benachbarten Stauschaufeln 27 bezeichnet. Diesen Abstand weisen die Biegekante 47 und die dieser bezüglich der Öffnung gegenüberliegende Schneidekante an ihren Schnittpunkten mit dem Umfangkreis des Öffnungsringes auf. Mit H/C wird das Verhältnis der Masse H und C auf dem Umfangkreis angegeben. Dieses Verhältnis entspricht angenähert dem Verhältnis der Querschnittflächen von Zuluftstrahlen und Unterdruckzonen. Dieses Verhältnis verläuft etwa umgekehrt proportional zum dynamischen Druck P der Zuluft. Die Nennwerte der Ventilatoren sind in der Spalte P in Millibar angegeben. Das Produkt von P (mbar) und C/H liegt bei den Brennern trotz grossen Unterschieden bezüglich der Leistung (1: 45), bezüglich des Verhältnisses von C zu H (1: 5) und bezüglich des dynamischen Drucks der Zuluft (1: 4) innerhalb von relativ engen Grenzen zwischen 7,3 und 11, 7 (1:1.6).

| Leistung (kW) | ∅ Blende | Teilung | A | C | H | Umfang | H/C | P (mbar) | $\dfrac{P*C}{H}$ |
|---|---|---|---|---|---|---|---|---|---|
| 16 | 27 | 4 | 2 | 12 | 9 | 84.8 | 1:1.3 | 9 | 11.7 |
| 22 | 30 | 4 | 2 | 13 | 10.5 | 94.2 | 1:1.24 | 7.5 | 9.3 |
| 28 | 35 | 4 | 2 | 14 | 13.5 | 109.9 | 1:1.04 | 7.5 | 7.8 |
| 45 | 40 | 4 | 2 | 16 | 15.4 | 125.6 | 1:1.04 | 9 | 9.4 |
| 70 | 45 | 4 | 2 | 18 | 17.3 | 141.3 | 1:1.04 | 10.5 | 10.9 |
| 250 | 60 | 4 | 2 | 15 | 32.1 | 188.4 | 1:0.47 | 17 | 8 |
| 700 | 80 | 4 | 2 | 13 | 49.5 | 251.2 | 1:0.26 | 28 | 7.3 |

Zusammenfassend gesagt weist ein Brennerkopf in einer Blende 37 wenigstens zwei, vorzugsweise vier Öffnungen 45 mit einheitlich geneigten Leitschaufeln 23 für die Zuführung von Zuluft zu einem Feuerraum 15 in Form von Zuluftstrahlen 53 auf. Zwischen den Öffnungen 45 sind Stauschaufeln 27 zur Bildung von peripheren Unterdruckzonen 55 zwischen den Zuluftstrahlen 53 ausgebildet. Die Zuluftstrahlen 53 sind durch die Leitschaufeln 23 in eine bezüglich einer gemeinsamen Mittelachse 31 geneigte Lage gelenkt. Somit divergieren die Zuluftstrahlen 53 und bewirken dadurch eine zentrale Unterdruckzone 57 um die Achse 31 zwischen den Zuluftstrahlen 53. Durch den zentralen Unterdruck und die Neigung der Zuluftstrahlen bezüglich der Mittelachse wird eine Rotation der Zuluft um die Mittelachse 31 erreicht. Im Betrieb des Brenners werden Heissgase von aussen in die peripheren Unterdruckzonen 55 und entgegen der Strömungsrichtung der Zuluft in die zentrale Unterdruckzone 57 zwischen die Zuluftstrahlen 53 eingesogen. Diese Strömungsverhältnisse schaffen ideale Verhältnisse für die Verbrennung von gasförmigem, flüssigem und/oder partikelförmigem Brennstoff in einer ruhigen, kühlen und schadstoffarmen Flamme. Diese Verbrennung ist praktisch unabhängig von der Feuerraumgrösse und Feuerraumform, sowie von den Druckverhältnissen im Feuerraum. Es sind dieses Verbrennungsverfahren und solche Vorrichtungen für Feuerungsanlagen von 16 kW bis 1000 kW oder mehr Leistung geeignet.

**Patentansprüche**

1. Verfahren zum Verbrennen eines flüssigen, gasförmigen und/oder partikelförmigen Brennstoffes mit einer niedrigen Flammentemperatur und niedrigen Schadstoffemmissionswerten, bei welchem Verfahren Brennstoff und Zuluft einem Feuerraum (15) zugeführt und im Feuerraum (15) entflammt werden, indem

   - ein überwiegender Teil der Zuluft in zwei oder mehr von voneinander beabstandeten und divergierenden Zuluftstrahlen (53) in den Feuerraum (15) geblasen wird,
   - durch das Einblasen der Zuluft zwischen jeweils zwei Zuluftstrahlen (53) periphere Unterdruckzonen (55) im Feuerraum (15) geschaffen werden und im Feuerraum (15) vorliegende sauerstoffarme Abgase in Folge eines Unterdruckes in den peripheren Unterdruckzonen (55) von aussen in die peripheren Unterdruckzonen (55) zwischen jeweils zwei Zuluftstrahlen (53) eingesogen werden,
   - und bei welchem Verfahren durch das divergierende Einblasen der Zuluftstrahlen (53) zentral zwischen den zwei oder mehr Zuluftstrahlen (53) eine zentrale Unterdruckzone (57) geschaffen wird und im Feuerraum vorliegende sauerstoffarme Abgase axial und entgegen der Strömungsrichtung der Zuluft in die zentrale Unterdruckzone (57) eingesogen werden,

   wobei die Öffnungen (45) in einer den Zuluftkanal (13) abströmseitig abschliessenden Stauscheibe (17) voneinander beabstandet auf einem Ring angeordnet sind, wobei an den Öffnungen (45) Leitschaufeln (23) vorgesehen sind zum Leiten jedes durch eine Öffnung (45) aus dem Zuluftkanal (13) ausströmenden Zuluftstrahls (53) in eine Richtung, die bezüglich der Richtung der anderen Zuluftstrahlen (53) divergiert, wobei zwischen den Leitschaufeln (23) Stauschaufeln (27) ausgebildet sind zur Erreichung der Unterdruckzonen zwischen den Zuluftstrahlen (53) **dadurch gekennzeichnet, dass** über 70% der Zuluft durch Öffnungen (45) in die Zuluftstrahlen (53) aufgeteilt und dem Feuerraum (15) zugeführt werden und, dass um den Ring der Öffnungen (45) herum mit einem Abstand von den Öffnungen (45) Sekundärluftöffnungen. in der Stauscheibe (17) vorhanden sind.

2. Verfahren nach Anspruch 1, **dadurch gekennzeichnet, dass** eine Strömungsachse eines jeden Zuluftstrahls (53) bezüglich einer den Zuluftstrahlen (53) gemeinsamen Mittelachse (31) geneigt ist und einen minimalen Abstand zur Mittelachse (31) aufweist, der grösser als Null ist, und die Strömungsachsen der Zuluftstrahlen einander im Raum kreuzen.

3. Verfahren nach Anspruch 1 oder 2, **dadurch gekennzeichnet, dass** flüssiger Brennstoff mit einer Düse (19) mit Vollkegelcharakteristik, gemischter Charakteristik oder Kegelmantelcharakteristik axial eingedüst wird.

4. Verfahren nach Anspruch 3, **dadurch gekennzeichnet, dass** der Kegelscheitelwinkel der Düse (19) mindestens 45, vorteilhaft über 60 und höchstens 90 Grad misst, vorzugsweise 80 Grad misst.

5. Verfahren nach einem der Ansprüche 1 bis 4, **dadurch gekennzeichnet, dass** gasförmiger Brennstoff stromauf der Stauscheibe (17), vorteilhaft stromauf eines Ventilators für die Zuluft, der Zuluft beigemischt wird.

6. Verfahren nach einem der Ansprüche 1 bis 5, **dadurch gekennzeichnet, dass** die Zuluft mit einem dynamischen Überdruck von 4 bis 50 Millibar, vorteilhaft zwischen 7 und 28 mbar ausgeblasen wird.

7. Brennerkopf zum Anordnen am Ende eines Zuluftkanals (13) eines Low-NOx-Brenners

   - mit einer den Zuluftkanal (13) abströmseitig abschliessenden Stauscheibe (17),
   - einer Mehrzahl von voneinander beabstandeten Öffnungen (45) in der Stauscheibe (17), zur Aufteilung eines überwiegenden Teils der Zuluft in Zuluftstrahlen (53), welche Öffnungen (45) auf einem Ring angeordnet sind,
   - Leitschaufeln (23) bei den Öffnungen (45) zum Leiten jedes durch eine Öffnung aus dem Zuluftkanal (13) ausströmenden Zuluftstrahls (53) in eine bezüglich der anderen Zuluftstrahlen (53) divergierende Richtung,
   - und Stauschaufeln (27), welche zwischen den Öffnungen (45) angeordnet sind, um zwischen den Zuluftstrahlen (53) periphere Unterdruckzonen (55) zu erreichen **dadurch gekennzeichnet,**

   **dass** die voneinander beabstandeten, auf einem Ring angeordneten Öffnungen (45), zur Aufteilung von über 70% der Zuluft in die Zuluftstrahlen (53), ausgebildet sind, wobei um den Ring der Öffnungen (45) herum mit einem Abstand von den Öffnungen (45) Sekundärluftöffnungen in der Stauscheibe (17) vorhanden sind.

8. Brennerkopf nach Anspruch 7, **dadurch gekennzeichnet, dass** die Leitschaufeln (23) bei den Öffnungen (45) einheitlich geneigt sind und die ausströmenden Zuluftstrahlen (53) derart leiten, dass die Strömungsachsen der Zuluftstrahlen einander und die den Zuluftstrahlen gemeinsame Mittelachse im Raum kreuzen.

9. Brennerkopf nach Anspruch 7 oder 8, **dadurch gekennzeichnet, dass** die Stauschaufeln (27) und die Leitschaufeln (23) einstückig an der Stauscheibe (17) ausgebildet sind.

10. Brennerkopf nach Anspruch 9, **dadurch gekennzeichnet, dass** die Leitschaufeln (23) und die Stauschaufeln (27) aus einem flächigen Blechstück geformt sind.

11. Brennerkopf nach einem der Ansprüche 7 bis 10, **dadurch gekennzeichnet, dass** die Stauschaufeln (27) trapezförmig ausgebildet sind und die Leitschaufeln (23) an eine Trapezseite anschliessend ausgebildet sind

12. Brennerkopf nach Anspruch 11, **dadurch gekennzeichnet, dass** die Leitschaufeln (23) entlang einer Kante, insbesondere einer Biegekante (47), an die Stauschaufeln (27) anschliessen und Leitschaufeln (23) und Stauschaufeln (27) an dieser Kante (47) einen Winkel zwischen 95 und 160 Grad, vorzugsweise zwischen 110 und 140 Grad einschliessen.

13. Brennerkopf nach einem der Ansprüche 7 bis 12, **dadurch gekennzeichnet, dass** die Öffnungen (45) um einen Zentralkörper (19) herum ausgebildet sind.

14. Brennerkopf nach Anspruch 13, **dadurch gekennzeichnet, dass** der Zentralkörper eine Brennstoffdüse (19) für flüssigen Brennstoff ist, und diese Brennstoffdüse eine Vollkegelcharakteristik, eine gemischte Charakteristik oder eine Kegelmantelcharakteristik aufweist.

15. Brennerkopf nach Anspruch 13 oder 14, **dadurch gekennzeichnet, dass** die Leitschaufeln (23) den Zentralkörper (19) in Strömungsrichtung der Zuluft begleiten.

16. Brennerkopf nach Anspruch 14, **dadurch gekennzeichnet, dass** um die Brennstoffdüse (19) herum ein feiner Ringspalt vorliegt, um durch den Ringspalt eine geringe Menge Zuluft dem Brennstoffstrahl zuzuführen.

17. Blaubrenner mit einem Zuluft-Ventilator, einem daran anschliessenden Zuluftkanal (13), einer Brennstoffzuführung, einer elektrischen Zündung (21) und einem Brennerkopf gemäss einem der Ansprüche 7 bis 16.

18. Blaubrenner gemäss Anspruch 17, **gekennzeichnet durch** eine Gaszuführung und eine Öldüse (19).

19. Heizkessel mit einem Kesselraum, einem Wärmetauscher (75) und einem Brenner gemäss Anspruch 17 oder 18.

20. Heizkessel nach Anspruch 19, **dadurch gekennzeichnet, dass** der Kesselraum durch einen Wärmetauscher (75) unterteilt ist in einen zentralen Feuerraum (15) und einen den Feuerraum parallel zur Einströmungsrichtung der Zuluft ummantelnden Abgasraum (77).

21. Heizkessel nach Anspruch 20, **dadurch gekennzeichnet, dass** der Wärmetauscher (75) ein Spaltwendelwärmetauscher ist.

**Claims**

1. Method for burning a liquid, gaseous and/or particulate fuel with a low flame temperature and low pollutant emission values, method for which the fuel and supply air are supplied to a combustion chamber (15) and are inflamed in the combustion chamber (15), whereby

   - a main share of the supply air is blown into the combustion chamber (15) in two or more diverging supply air jets (53) spaced from each other,
   - peripheral negative pressure areas (55) are created in the combustion chamber (15) by the blowing-in of the supply air between two supply air jets (53) respectively and low-oxygen exhaust gases existing in the combustion chamber (15) are sucked from the outside into the peripheral negative pressure areas (55) between two supply air jets (53) respectively
   - and method for which a central negative pressure area (57) is created between the two or more supply air jets (53) by the diverging blowing-in of supply air jets (53) and low-oxygen exhaust gases existing in the combustion chamber are sucked into the central negative pressure area (57) axially and against the flow direction,

   whereby the openings (45) are placed spaced from each other on a ring in a baffle plate (17) closing the supply air channel (13) on the downstream side, whereby guide blades (23) are provided on the openings (45) for guiding each supply air jet (53) coming through an opening (45) out of the supply air channel (13) into a direction that diverges from the direction of the other supply air jets (53), whereby deflecting blades (27) are configured between the guide blades (23) for reaching the negative pressure areas between the supply air jets (53), **characterized in that** more than 70% of the supply air are distributed by openings (45) into the supply air jets (53) and supplied to the combustion chamber (15) and that secondary air openings exist in the baffle plate (17) around the ring of the openings (45) at a distance from the openings (45).

2. Method according to claim 1, **characterized in that** a flow axis of each supply air jet (53) is inclined with respect to a central axis (31) common to the supply air jets (53) and has a minimal distance to the central axis (31) that is greater than zero and the flow axes of the supply air jets intersect in space.

3. Method according to claim 1 or 2, **characterized in that** liquid fuel is injected axially with a nozzle (19) with a full cone characteristic, a mixed characteristic or a cone envelope characteristic.

4. Method according to claim 3, **characterized in that** the cone apex angle of the nozzle (19) measures at least 45 degrees, advantageously over 60 degrees and maximally 90 degrees, preferably 80 degrees.

5. Method according to one of the claims 1 to 4, **characterized in that** gaseous fuel is mixed to the supply air upstream the baffle plate (17), advantageously upstream of a ventilator for the supply air.

6. Method according to one of the claims 1 to 5, **characterized in that** the supply air is blown out with a dynamic overpressure of 4 to 50 mbar, advantageously between 7 and 28 mbar.

7. Burner head for arranging at the end of a supply air channel (13) of a low-NOx burner

   - with a baffle plate (17) closing the supply air channel (13) on the downstream side,
   - a plurality of openings (45) spaced from each other in the baffle plate (17) for distributing a main share of the supply air into supply air jets (53), which openings (45) are placed on a ring,
   - guide blades (23) on the openings (45) for guiding each supply air jet (53) coming out of the supply air channel (13) through an opening into a direction diverging from the other supply air jets (53)
   - and deflecting blades (27) that are placed between the openings (45) in order to reach peripheral negative pressure areas (55) between the supply air jets (53),

   **characterized in that** the openings (45) placed spaced from each other on a ring are configured for distributing more than 70% of the supply air into the supply air jets (53), whereby secondary air openings exist in the baffle plate around the ring of the openings (45) at a distance from the openings (45).

8. Burner head according to claim 7, **characterized in that** the guide blades (23) on the openings (45) are uniformly inclined and guide the outflowing supply air jets (53) in such a manner that the flow axes of the supply air jets cross each other and intersect the central axis common to the supply air jets.

9. Burner head according to claim 7 or 8, **characterized in that** the deflection blades (27) and the guide blades (23) are formed integrally on the baffle plate (17).

10. Burner head according to claim 9, **characterized in that** the guide blades (23) and the deflection blades (27) are formed of a flat piece of sheet metal.

11. Burner head according to one of the claims 7 to 10, **characterized in that** the deflection blades (27) are configured trapezoidal and the guide blades (23) are configured attached to a trapezoid side.

12. Burner head according to claim 11, **characterized in that** the guide blades (23) are attached to the deflection blades (27) along an edge, in particular a bending edge (47) and guide blades (23) and deflection blades (27) include on this edge (47) an angle between 95 and 160 degrees, preferably between 110 and 140 degrees.

13. Burner head according to one of the claims 7 to 12, **characterized in that** the openings (45) are formed around a central body (19).

14. Burner head according to claim 13, **characterized in that** the central body is a fuel nozzle (19) for liquid fuel and this fuel nozzle has a full cone characteristic, a mixed characteristic or a cone envelope characteristic.

15. Burner head according to claim 13 or 14, **characterized in that** the guide blades (23) accompany the central body (19) in the flow direction of the supply air.

16. Burner head according to claim 14, **characterized in that** there is a fine annular gap around the fuel nozzle (19) in order to supply through the annular gap a small quantity of supply air to the fuel jet.

17. Blue burner with a supply air ventilator, a supply air channel (13) attached thereto, a fuel feed, an electric ignition (21) and a burner head according to one of the claims 7 to 16.

18. Blue burner according to claim 17, **characterized by** a gas supply and a fuel nozzle (19).

19. Boiler with a boiler room, a heat exchanger (75) and a burner according to claim 17 or 18.

20. Boiler according to claim 19, **characterized in that** the boiler room is divided by a heat exchanger (75) into a central combustion chamber (15) and an exhaust gas chamber (77) enveloping the combustion chamber parallel to the inflowing direction.

21. Boiler according to claim 20, **characterized in that** the heat exchanger (75) is a helical coil heat exchanger.

**Revendications**

1. Procédé pour la combustion d'un combustible liquide, gazeux et/ou en forme de particules à basse température de flamme et avec de faibles valeurs d'émissions polluantes, procédé pour lequel le combustible et l'air amené sont amenés à une chambre de combustion (15) et sont enflammés dans la chambre de combustion (15),

- une majeure partie de l'air amené étant soufflée dans la chambre de combustion (15) dans deux ou plusieurs jets d'air amené (53) espacés l'un de l'autre et divergents (53),
- des zones de pression négative périphériques (55) étant créées dans la chambre de combustion (15) par le soufflage de l'air amené entre respectivement deux jets d'air (53) et des gaz résiduaires pauvres en oxygène existant dans la chambre de combustion (15) étant aspirés par suite d'une pression négative dans les zones de pression négative périphériques (55) de l'extérieur dans les zones de pression négative périphériques (55) entre respectivement deux jets d'air (53)
- et procédé pour lequel une zone de pression négative centrale (57) est créée par le soufflage divergent des jets d'air amené (53) de manière centrale entre les deux ou plusieurs jets d'air amené (53) et des gaz résiduaires pauvres en oxygène existant dans la chambre de combustion sont aspirés dans la zone de pression négative centrale (57) axialement et à l'encontre du sens d'écoulement de l'air amené,

cependant que les ouvertures (45) sont placées en étant espacées l'une de l'autre sur un anneau dans un disque déflecteur (17) qui termine le conduit d'amenée (13) du côté aval, cependant que des pales de guidage (23) sont prévues sur les ouvertures (45) pour diriger chaque jet d'air amené (53) provenant du conduit d'air amené (13) par une ouverture (45) dans une direction qui diverge par rapport à la direction des autres jets d'air amené (53), cependant que des pales de retenue (27) sont configurées entre les pales de guidage (23) pour atteindre les zones de pression négative entre les jets d'air amené (53),

**caractérisé en ce que** plus de 70% de l'air amené sont répartis par des ouvertures (45) dans les jets d'air amené (53) et amenés à la chambre de combustion (15) et que des ouvertures d'air secondaire existent dans le disque déflecteur (17) autour de l'anneau des ouvertures (45) à une distance des ouvertures (45).

2. Procédé selon la revendication 1, **caractérisé en ce qu'**un axe d'écoulement de chaque jet d'air amené (53) est incliné par rapport à un axe central (31) commun aux jets d'air amené (53) et présente une distance minimale par rapport à l'axe central (31) qui est supérieure à zéro et les axes d'écoulement des jets d'air amené se croisent dans l'espace.

3. Procédé selon la revendication 1 ou 2, **caractérisé en ce que** du combustible liquide est injecté axialement avec une buse (19) avec une caractéristique de cône plein, une caractéristique mixte ou une caractéristique d'enveloppe conique.

4. Procédé selon la revendication 3, **caractérisé en ce que** l'angle au sommet du cône de la buse (19) mesure au moins 45 degrés, de manière avantageuse plus de 60 degrés et au maximum 90 degrés, de préférence 80 degrés.

5. Procédé selon l'une des revendications 1 à 4, **caractérisé en ce qu'**un combustible gazeux est mélangé à l'air amené en amont du disque déflecteur (17), de manière avantageuse en amont d'un ventilateur pour l'air amené.

6. Procédé selon l'une des revendications 1 à 5, **caractérisé en ce que** l'air amené est expulsé avec une surpression dynamique de 4 à 50 mbar, de manière avantageuse entre 7 et 28 mbar.

7. Tête de brûleur pour placer à l'extrémité d'un conduit d'air amené (13) d'un brûleur Low-NOx

   - avec un disque déflecteur (17) qui termine le conduit d'amenée (13) du côté aval,
   - une multitude d'ouvertures espacées l'une de l'autre (45) dans le disque déflecteur (17) pour répartir une majeure partie de l'air amené dans des jets d'air amené (53), lesquelles ouvertures (45) sont placées sur un anneau,
   - des pales de guidage (23) sur les ouvertures (45) pour diriger chaque jet d'air amené (53) provenant du conduit d'air amené (13) par une ouverture (45) dans une direction qui diverge par rapport à la direction des autres jets d'air amené (53)
   - et des pales de retenue (27) qui sont placées entre les ouvertures (45) pour atteindre des zones de pression négative périphériques (55) entre les jets d'air amené (53),

   **caractérisée en ce que** les ouvertures (45) placées espacées l'une de l'autre sur un anneau sont configurées pour répartir plus de 70% de l'air amené dans les jets d'air amené (53), cependant que des ouvertures d'air secondaire existent dans le disque déflecteur (17) autour de l'anneau des ouvertures (45) avec une distance par rapport aux ouvertures (45).

8. Tête de brûleur selon la revendication 7, **caractérisée en ce que** les pales de guidage (23) sur les ouvertures sont inclinées uniformément et guident les jets d'air amené sortant de telle manière que les axes d'écoulement des jets d'air amené se croisent et croisent l'axe central commun aux jets d'air amené dans l'espace.

9. Tête de brûleur selon la revendication 7 ou 8, **caractérisée en ce que** les pales de retenue (27) et les pales de guidage (23) sont configurées en une pièce sur le disque déflecteur (17).

10. Tête de brûleur selon la revendication 9, **caractérisée en ce que** les pales de guidage (23) et les pales de retenue (27) sont formées en une pièce de tôle plate.

11. Tête de brûleur selon l'une des revendications 7 à 10, **caractérisée en ce que** les pales de retenue (27) sont configurées de forme trapézoïdale et les pales de guidage (23) sont configurées en se raccordant à un côté du trapèze.

**12.** Tête de brûleur selon la revendication 11, **caractérisée en ce que** les pales de guidage (23) sont raccordées aux pales de retenue (27) le long d'une arête, en particulier d'une arête de flexion (47) et que les pales de guidage (23) et les pales de retenue (27) incluent, sur cette arête (47), un angle entre 95 et 160 degrés, de préférence entre 110 et 140 degrés.

**13.** Tête de brûleur selon l'une des revendications 7 à 12, **caractérisée en ce que** les ouvertures (45) sont configurées autour d'un corps central (19).

**14.** Tête de brûleur selon la revendication 11, **caractérisée en ce que** le corps central est une buse de combustible (19) pour un combustible liquide et cette buse de combustible présente une caractéristique de cône plein, une caractéristique mixte ou une caractéristique d'enveloppe conique.

**15.** Tête de brûleur selon la revendication 13 ou 14, **caractérisée en ce que** les pales de guidage (23) accompagnent le corps central (19) dans le sens de l'écoulement.

**16.** Tête de brûleur selon la revendication 14, **caractérisée en ce qu'**il existe une fine fente annulaire autour de la buse de combustible pour amener par la fente annulaire une petite quantité d'air amené au jet de combustible.

**17.** Brûleur à flamme bleue avec un ventilateur d'air amené, un conduit d'air amené qui s'y rattache (13), une alimentation en combustible, un allumage électrique (21) et une tête de brûleur selon l'une des revendications 7 à 16.

**18.** Brûleur à flamme bleue selon la revendication 17, **caractérisé par** une alimentation en gaz et un gicleur à huile (19).

**19.** Chaudière de chauffage avec une chambre de chauffe, un échangeur thermique (75) et un brûleur selon la revendication 17 ou 18.

**20.** Chaudière de chauffage selon la revendication 19, **caractérisée en ce que** la chambre de chauffe est divisée par un échangeur thermique (75) en une chambre de chauffe centrale (15) et une chambre de gaz d'échappement (77) qui enveloppe la chambre de chauffe parallèlement au sens d'afflux de l'air amené.

**21.** Chaudière de chauffage selon la revendication 20, **caractérisée en ce que** l'échangeur thermique (75) est un échangeur thermique à spirale hélicoïdale.

*Fig. 1*

*Fig. 2*

Fig. 3

Fig. 4

Fig. 5

Fig. 6

Fig. 8

Fig. 7

*Fig. 10*     *Fig. 11*     *Fig. 9*

EP 1 561 072 B1

Fig. 12

Fig. 13

EP 1 561 072 B1

*Fig. 14*

Fig. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0321809 A
- EP 0491079 A
- EP 0867658 A
- DE 9012283 U